# EUROPEAN PATENT SPECIFICATION

(11) **EP 3 451 468 B1**
(45) Date of publication and mention of the grant of the patent: **09.06.2021**
(21) Application number: 17833251.6
(22) Date of filing: 18.04.2017
(51) Int. Cl.: H01R 43/24, H01R 12/71, H01R 12/72, H01R 43/16, B21D 28/16

(54) **METHOD FOR MANUFACTURING POWER INTERFACE**
VERFAHREN ZUR HERSTELLUNG EINER STROMSCHNITTSTELLE
PROCÉDÉ DE FABRICATION D'INTERFACE D'ALIMENTATION

(30) Priority: 27.07.2016 CN 201610606153
(43) Date of publication of application: 06.03.2019
(73) Proprietor: GUANGDONG OPPO MOBILE TELECOMMUNICATIONS CORP., LTD., Wusha, Chang'an Dongguan, Guangdong 523860 (CN)
(72) Inventor: LI, Feifei, Dongguan Guangdong 523860 (CN); GU, Guodong, Dongguan Guangdong 523860 (CN)
(74) Representative: Manitz Finsterwald Patent- und Rechtsanwaltspartnerschaft mbB
(86) International application number: PCT/CN2017/080956
(87) International publication number: WO 2018/018945

(56) References cited:
- CN-A- 104 882 705
- CN-A- 106 025 769
- CN-A- 106 099 459
- CN-A- 106 229 791
- CN-U- 205 960 248
- CN-Y- 201 072 837
- CN-Y- 201 307 662
- CN-Y- 201 307 662
- US-A- 4 774 763
- US-A- 5 163 223

## Description

### TECHNICAL FIELD

The present disclosure relates to the technical field of communication technology, and in particular to a power adapter, a mobile terminal, and a method for manufacturing the power interface.

### BACKGROUND

With the advancement of times, Internet and mobile communication networks provide a huge number of functional applications. Users can use mobile terminals not only for traditional applications, for example, using smart phones to answer or make calls, but also for browsing web, transferring picture, playing games, and the like at the same time. However, manufacturing processes of the mobile terminals are cumbersome and costly, which is not conducive to the improvement of market competitiveness. Manufacturing processes of the mobile terminals are cumbersome and costly, which is not conducive to the improvement of market competitiveness.

D1 (US5163223A) discloses electrical connector pins capable of providing high Hertzian stresses. The electrical connector pins are made by a progressive punch press process that forms, in two stages, opposed, substantially fully rounded contact surfaces on the pins.

D2 (US4774763A) discloses a method of making an electrical contact intended to be inserted into a plated-through hole in a printed circuit board including a compliant section which engages the inside of the hole in an interference fit thereby gripping the sides of the hole to retain the pin therein providing excellent electrical integrity without need for soldering.

D3 (CN201307662Y) discloses a universal serial bus structure comprising an insulating housing and a connection terminal group. The connection terminal group has a first terminal set and a second terminal set, and the bases of the first terminal set and the second terminal set are received in the insulating housing. A welding end extending toward the outside of the insulating housing extends from one side of the base, and an abutting end extends from the other side of the base. The abutting ends of the first terminal set and the second terminal set are spaced apart from each other and are arranged in an array with space. The first terminal set and the second terminal set each have a section facing the punching hole defined in the insulating housing on adjacent sides of the base. Since the first terminal set and the second terminal set are formed by stamping a single conductive sheet by using a single mold, the waste generated by the stamping is reduced. Besides, the first terminal set and the second terminal set can be fixed in the insulating housing by a single step, thereby achieving effects of reducing mold development costs, saving materials and simplifying processes.

### SUMMARY

The present invention aims at solving one of the technical problems in the related art at least to some extent. A method for manufacturing the power interface having the advantages of having simple manufacturing processes and low cost is provided by the present claim 1.

An exemplary mobile terminal is further provided in the present disclosure. The mobile terminal includes the power interface as previously described.

An exemplary power adapter is further provided in the present disclosure. The power adapter includes the power interface as previously described.

The method for manufacturing the power interface of the present disclosure according to the embodiments of the present disclosure includes: T10: providing a pin workblank, and disposing the pin workblank on a first mold; and T20: performing a punching shear process for the pin workblank by a second mold, thereby forming the power pin of the power interface. After forming a plurality of power pins each manufactured by the steps T10∼T20, the method further comprises: embedding the plurality of power pins into a connection body having a first connection surface and a second connection surface opposite to the first connection surface. Each of the plurality of power pins is solid, and comprises a first sidewall surface and a second sidewall surface opposite to the first sidewall surface. The first sidewall surface and the second sidewall surface of each of the power pins extend beyond and are exposed outside the connection body. The first sidewall surface is configured as a part of the first connection surface, and the second sidewall surface is configured as a part of the second connection surface. The connection body further comprises a hard frame and a plastic encapsulation portion, and the step of embedding the plurality of power pins into the connection body comprises: arranging the plurality of the power pins into a plurality of receiving grooves of the hard frame respectively; and wrapping the plurality of the power pins and the hard frame by the plastic encapsulation portion, wherein the first sidewall surface and the second sidewall surface of each of the power pins are exposed outside the plastic encapsulation portion.

In the method for manufacturing the power interface according to the embodiments of the present disclosure, the power pin is formed by means of shearing. In this way, it is possible to omit the process of removing burrs. Thus, the manufacturing cycle may be shortened, and the manufacturing cost may be saved.

The exemplary mobile terminal includes the power interface as previously described.

In the mobile terminal the power pin is formed by means of shearing. In this way, it is possible to omit the process of removing burrs. Thus, the manufacturing cycle may be shortened, and the manufacturing cost may be saved.

The exemplary power adapter includes the power interface as previously described.

In the power adapter the power pin is formed by means of shearing. In this way, it is possible to omit the process of removing burrs. Thus, the manufacturing cycle may be shortened, and the manufacturing cost may be saved.

### BRIEF DESCRIPTION OF THE DRAWINGS

FIG. 1 is a perspective view of a power interface.
FIG. 2 is a cutaway view of the power interface.
FIG. 3 is a partially enlarged view of portion A of FIG. 2.
FIG. 4 is an explored view of the power interface.
FIG. 5 is a perspective view of the power pin.
FIG. 6 is partial view of the power pin.
FIG. 7 is a stereogram of a pin workblank in a method for manufacturing the power interface according to one embodiment of the present disclosure.
FIG. 8 is a flow chart illustrating the method for manufacturing the power interface according to one embodiment of the present disclosure.
FIG. 9 is an explored view of a tool suitable for the method for manufacturing the power interface according to another embodiment of the present disclosure.
FIG. 10 is a perspective view of a tool suitable for the method for manufacturing the power interface according to another embodiment of the present disclosure.
FIG. 11 is a partial view of a tool suitable for the method for manufacturing the power interface according to another embodiment of the present disclosure.
FIG. 12 is a perspective view of a tool suitable for the method for manufacturing the power interface according to another embodiment of the present disclosure.
FIG. 13 is a flow chart illustrating the method for manufacturing the power interface according to another embodiment of the present disclosure.
FIG. 14 is a structural view of the power pin of the power interface.

### List of reference numbers in drawings:

power interface 100;
plug housing 130;
connection body 110, first connection surface 111, second connection surface 112; hard frame 113, receiving groove 1131, protrusion 1132, front end 1133; plastic encapsulation portion 114;
power pin 120, first sidewall surface 121, second sidewall surface 122;
data pin 150;
circuit board 140;
pin workblank 200;
first surface 201, second surface 202, positioning hole 203;
chamfer 210;
first mold 220, groove 221;
second mold 230, punching shear surface 231, first inclined surface 2311, second inclined surface 2312.

### DETAILED DESCRIPTION

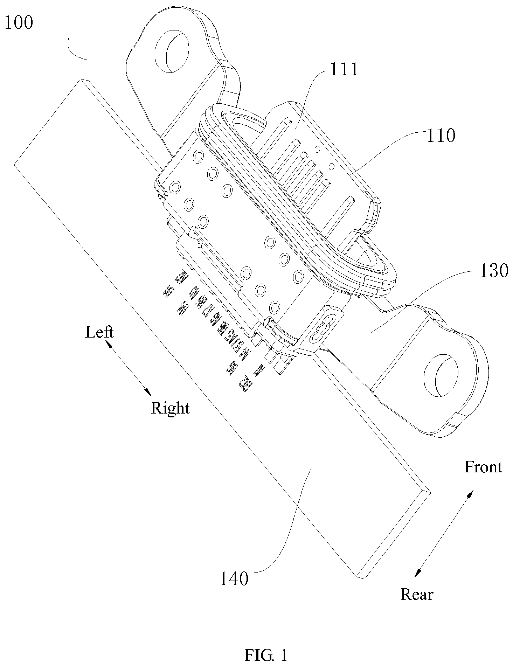

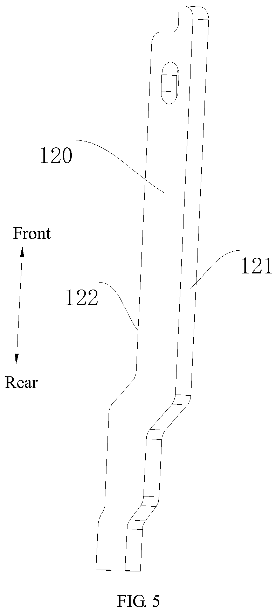

A power interface 100 according to the present disclosure may be described in detail below with reference to FIGS. 1-14. It should be noted that, the power interface 100 may include an interface configured for charging or data transmission, and may be disposed in a mobile terminal such as a mobile phone, a tablet computer, a laptop, or any other suitable mobile terminal having a rechargeable function. The power interface 100 may be electrically connected to a corresponding power adapter to achieve a communication of electrical signals and data signals.

Referring to FIGS. 1-6, the power interface 100 may include a connection body 110 and a plurality of power pins 120.

More specifically, the connection body 110 may include a first connection surface 111 and a second connection surface 112. The first connection surface 111 and the second connection surface 112 each may be adapted to be electrically connected with a corresponding interface of the power adapter. The plurality of the power pins 120 may be embedded in the connection body 110. Each power pin 120 may include a first sidewall surface 121 and a second sidewall surface 122. The first sidewall surface 121 may be configured as a part of the first connection surface 111, and the second sidewall surface 122 may be configured as a part of the second connection surface 112. In other words, the first sidewall surface 121 may extend beyond and be exposed outside the connection body 110, so as to be configured as a part of the first connection surface 111, thereby facilitating each power pin 120 to electrically connect to the corresponding pin of the power adapter. Likewise, the second sidewall surface 122 may extend beyond and be exposed outside the connection body 110, so as to be configured as a part of the second connection surface 112, thereby facilitating each power pin 120 to electrically connect to the corresponding pin of the power adapter.

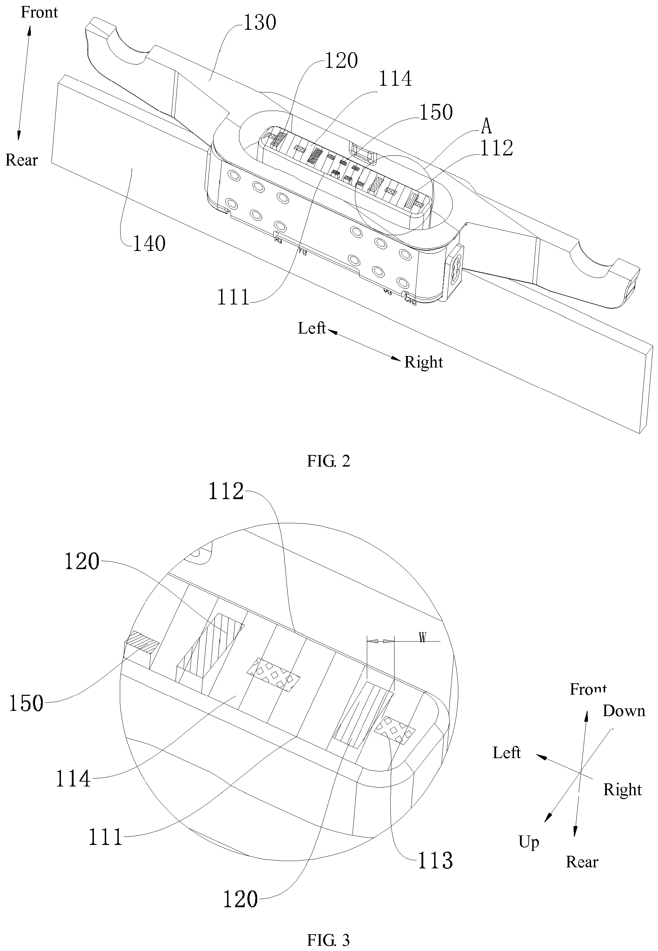

In the related art, the pin of the power interface includes two rows of pins that are arranged in an up-down direction, and each row of pins includes a plurality of pins spaced from each other. The pins in the upper row are respectively opposite to the pins in the lower row. It can be understood that, in the power interface 100, as shown in FIG. 3, the two power pins 120 opposite to each other in the up-down direction in the related art are designed into one integrated power pin 120, and two sidewall surfaces of each power pin 120 are respectively configured as a part of the connection surface adapted to be electrically connected to the power adapter. In other words, in the power interface 100, each power pin 120 is solid, and the first sidewall surface 121 and the second sidewall surface 122 of each power pin 120 are exposed outside the power interface 100 to be used as electrically-connecting pieces for being electrically connected to a power adapter (which achieve the function similar with that of the two independent power pins opposite to each other in the up-down direction in the related art). Thus, the cross-sectional area of each power pin 120 can be increased, thereby increasing the current-carrying amount of each power pin 120, and in turn increasing the transmission speed of the current, such that the power interface 100 is capable of having a fast charging function, and thus the charging efficiency of the battery may be improved.

According to the power interface 100 of the present disclosure, the first sidewall surface 121 and the second sidewall surface 122 of each power pin 120 are configured as the connection surfaces adapted to be electrically connected to the power adapter. Thus, the cross-sectional area of each power pin 120 can be increased, thereby increasing the current-carrying amount of each power pin 120, and in turn increasing the transmission speed of the current, such that the power interface 100 is capable of having a fast charging function, and thus the charging efficiency of the battery may be improved.

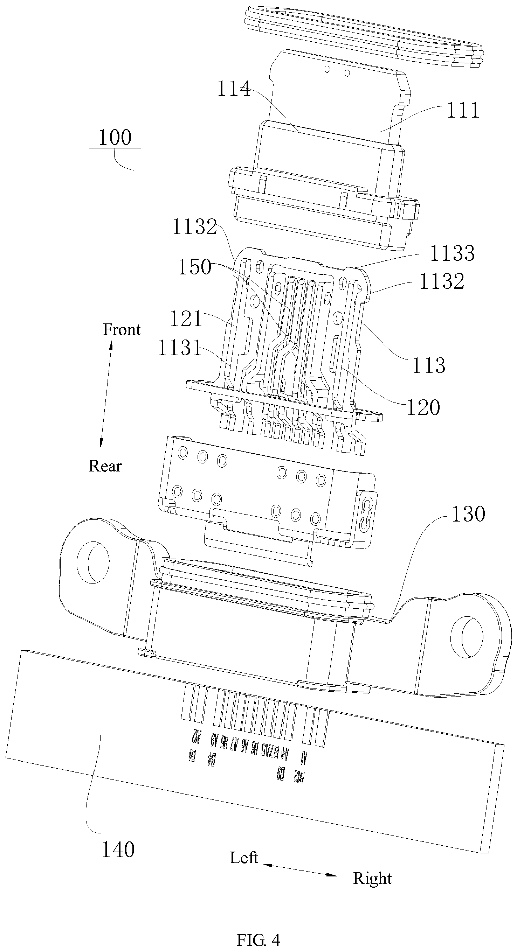

According to an embodiment of the present disclosure, as shown in FIGS. 4-6, the connection body 110 may include a hard frame 113 and a plastic encapsulation portion 114. More specifically, the hard frame 113 may have a receiving groove 1131, and the plurality of power pins 120 may be arranged in the receiving groove 1131. The plastic encapsulation portion 114 may be configured to wrap the plurality of power pins 120 and the hard frame 113. The first sidewall surface 121 and the second sidewall surface 122 may be exposed outside the plastic encapsulation portion 114. It can be understood that, by using the plastic encapsulation portion 114 to wrap the power pin 120 and the hard frame 113 together, the structural strength of the connection body 110 can be enhanced. In this way, fatigue damage to the connection body 110 due to the repeated insertion and removal of the power interface 100 may be reduced. The hard frame 113 may serve as a support, such that the structural strength of the connection body 110 may be enhanced.

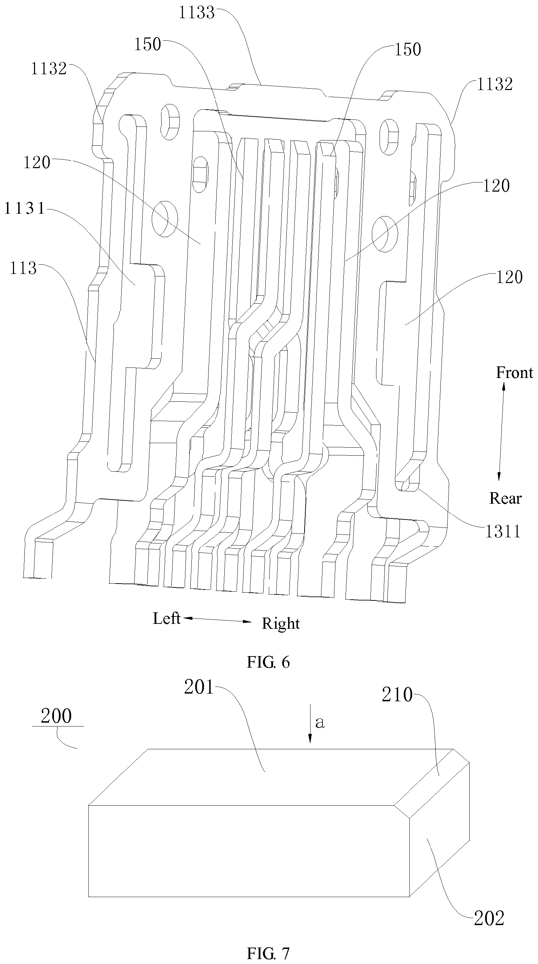

As shown in FIG. 4 and FIG. 6, according to an embodiment of the present disclosure, the hard frame 113 may have a protrusion 1132 disposed respectively at each of two ends that are spaced from each other in the width direction (the left and right direction as shown in FIGS. 4 and 6). An end surface of a free end of the protrusion 1132 may be configured as a part of an outer surface of the plastic encapsulation portion 114. In this way, when the power interface 100 is connected to the power adapter, the protrusion 1132 may apply a pressure to the power adapter, such that the power interface 100 and the power adapter may be firmly connected to each other, and the stability and reliability of the connection between the power interface 100 and the power adapter may be improved. Further, as shown in FIG. 6, the protrusion 1132 may be located at the front end 1133 of the hard frame 113.

According to an embodiment of the present disclosure, a cross-sectional area of each power pin 120 may be defined as S, and S≥0.09805mm². It is proved by experiments that when S≥0.09805mm², the current-carrying amount of the plurality of power pins 120 is at least 10A, and the charging efficiency can be improved by increasing the current-carrying amount of the plurality of power pins 120. In other words, when the cross-sectional area S of each power pin 120 satisfies: S≥0.09805mm², each power pin 120 may bear a current not less than 10A, that is, each power pin 120 may bear a large charging current and the large charging current won't damage each power pin 120. It is proved by experiments that when S=0.13125mm², the current-carrying amount of the plurality of power pins 120 is at least 12A, which can improve the charging efficiency. In other words, when the cross-sectional area S of each power pin 120 satisfies: S=0.13125mm², each power pin 120 may bear a current not less than 12A.

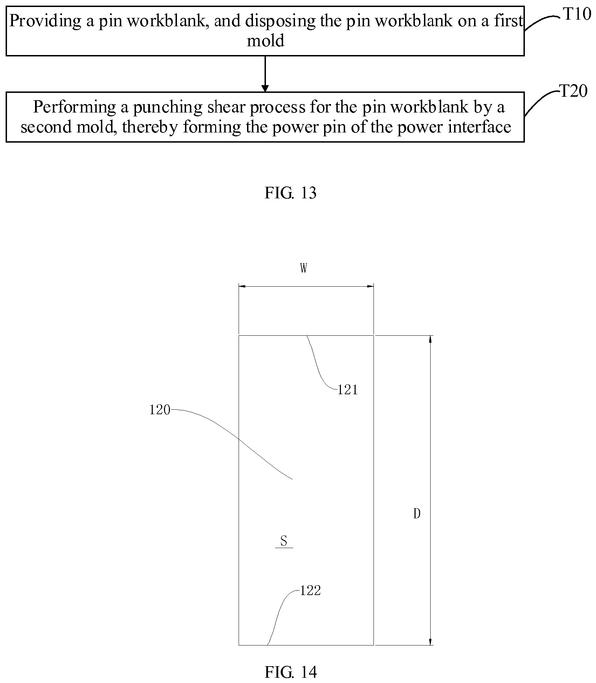

According to an embodiment of the present disclosure, referring to FIG. 14, a distance between the first sidewall surface 121 and the second sidewall surface 122 may be defined as D, and D satisfies the condition that: D≤0.7mm. That is, a thickness of the power pin 120 may be defined as D, and D satisfies the condition that: D≤0.7mm. Herein, the "thickness" may refer to the width of each power pin 120 in the up-down direction as shown in FIG. 3.

It should be noted that, in order to improve the universality of the power interface 100, the structural design of the power interface 100 needs to meet certain design standards. For example, in the design standard of the power interface 100, if the maximum thickness of the power interface 100 is h, then during the designing process of the power pins 120, the thickness D of each power pin 120 needs to be equal to or less than h. In the condition that D≤h, the greater the thickness D of each power pin 120 is, the greater the amount of current that each power pin 120 can carry, and the higher the charging efficiency of the power interface 100 is. That is, the thickness D of each power pin 120 which is between the first sidewall surface 121 and the second sidewall surface 122 may be substantially same to the thickness h of the power interface 100. For example, taking an USB Type-C interface as an example, the design standard for the thickness of the USB Type-C interface is h=0.7mm. Thus, when designing the power interface 100, it is required to set D≤0.7mm. Therefore, not only can the power interface 100 meet the general requirements, but also the cross-sectional area of each power pin 120 can be increased compared with the related art. In this way, the current-carrying amount of the plurality of power pins 120 can be increased, thereby improving the charging efficiency.

According to an embodiment of the present disclosure, at least one of the plurality of power pins 120 has a width W satisfying the following condition: 0.24mm≤W≤0.32mm. It is proved by experiments that when 0.24mm≤W≤0.32mm, the cross-sectional area of each power pin 120 can be maximized, which may in turns increase the current-carrying amount of the plurality of power pins 120, thereby improving the charging efficiency. Alternatively, it is possible that W=0.25mm. It is proved by experiments that when W=0.25mm, the current-carrying amount of the plurality of power pins 120 is at least 10A. Thus, the charging efficiency may be improved by increasing the current-carrying amount of the plurality of power pins 120.

According to one embodiment of the present disclosure, each power pin 120 may be an one-piece component. In this way, on one hand, it is possible to simplify the processing of each power pin 120, shorten the production cycle, and save the manufacturing cost. On the other hand, it is also possible to increase the cross-sectional area of each power pin 120, thereby increasing the current-carrying amount of the plurality of power pins 120.

The power interface 100 will be described in detail with reference to FIGS. 1-6 and 14 below. It is to be understood that the following description is illustrative, and is not intended limit the present disclosure.

For convenience of description, a Type-C interface is taken as an example of the power interface 100. The Type-C interface may also be called an USB Type-C interface. The Type-C interface belongs to a type of an interface, and is a new data, video, audio and power transmission interface specification developed and customized by the USB standardization organization to solve the drawbacks present for a long time that the physical interface specifications of the USB interface are uniform, and that the power can only be transmitted in one direction.

The Type-C interface may have the following features: a standard device may declare its willing to occupy a VBUS (that is, a positive connection wire of a traditional USB) to another device through a CC (Configuration Channel) pin in the interface specification. The device having a stronger willing may eventually output voltages and currents to the VBUS, while the other device may accept the power supplied from the VBUS bus, or the other device may still refuse to accept the power; however, it does not affect the transmission function. In order to use the definition of the bus more conveniently, a Type-C interface chip (such as LDR6013) may generally classify devices into four types: DFP (Downstream-facing Port), Strong DRP (Dual Role Power), DRP, and UFP (Upstream-facing Port). The willingness of these four types to occupy the VBUS bus may gradually decrease.

The DFP may correspond to an adapter, and may continuously want to output voltages to the VBUS. The Strong DRP may correspond to a mobile power, and may give up outputting voltages to the VBUS only when the strong DRP encounters the adapter. The DRP may correspond to a mobile phone. Normally, the DRP may expect other devices to supply power to itself. However, when encountering a device that has a weaker willingness, the DRP may also output the voltages and currents to the device. The UFP will not output electrical power externally. Generally, the UFP is a weak battery device, or a batteryless device, such as a Bluetooth headset. The USB Type-C interface may support the insertions both from a positive side and a negative side. Since there are four groups of power sources and grounds on both sides (the positive side and the negative side), the power supported by USB Type-C interface may be greatly improved.

As is previously described, the power interface 100 may be the USB Type-C interface. The power interface 100 may be suitable for a power adapter having a fast charging function, and also suitable for an ordinary power adapter. Here, it should be noted that, the fast charging may refer to a charging state in which the charging current is greater than or equal to 2.5A, or a charging state in which the rated output power is no less than 15W. The ordinary charging may refer to a charging state in which the charging current is less than 2.5A, or the rated output power is less than 15W. That is, when the power interface 100 is charged by using the power adapter having the fast charging function, the charging current is greater than or equal to 2.5A, or the rated output power is no less than 15 W. However, when the power interface 100 is charged by using the ordinary power adapter, the charging current is less than 2.5A, or the rated output power is less than 15W.

In order to standardize the power interface 100 and the power adapter adapted to the power interface 100, the size of the power interface 100 needs to meet the design requirements of the standard interface. For example, for the power interface 100 having 24 pins, the width meeting the design requirements (the width refers to the length of the power interface 100 in the left-right direction as shown in FIG. 1) is a. In order to make the power interface 100 in the present embodiment satisfy the design standard, the width of the power interface 100 in the present embodiment (the width refers to the length of the power interface 100 in the left-right direction as shown in FIG. 1) is also a. In order to enable the power pin to carry a large charging current in a limited space, a pair of power pins spaced from each other in the up-down direction may be integrated with each other to form an one-piece power pin described in the present disclosure. In this way, on one hand, it is convenient to optimize the arrangement of the components of the power interface 100. On the other hand, the cross-sectional area of the power pin may be increased, such that the power pin 120 may carry a larger amount of current.

More specifically, as shown in FIGS. 1-6, the power interface 100 may include a plug housing 130, a connection body 110, a data pin 150, and a power pin 120.

The plug housing 130, the data pin 150, and the power pin 120 may be all connected to the circuit board 140. The connection body 110 may include a hard frame 113 and a plastic encapsulation portion 114. The hard frame 113 may have a plurality of receiving grooves 1131. The power pin 120 and the data pin 150 may be disposed in the corresponding receiving grooves 1131. The plastic encapsulation portion 114 may be configured to wrap the plurality of power pins 120 and the hard frame 113. Upper and lower sidewall surfaces of the plastic encapsulation portion 114 may be respectively configured as a first connection surface 111 and a second connection surface 112. Both the first connection surface 111 and the second connection surface 112 may be adapted to be electrically connected to corresponding interfaces of the power adapter. The power pin 120 may include a first sidewall surface 121 and a second sidewall surface 122. The first sidewall surface 121 and the second sidewall surface 122 may be exposed outside the plastic encapsulation portion 114.

It can be understood that, by using the plastic encapsulation portion 114 to wrap the power pin 120 and the hard frame 113 together, the structural strength of the connection body 110 can be enhanced. In this way, fatigue damage to the connection body 110 due to the repeated insertion and removal of the power interface 100 may be reduced. The hard frame 113 may serve as a support, such that the structural strength of the connection body 110 may be enhanced.

The hard frame 113 may have a protrusion 1132 disposed respectively at the front end 1133 of the frame 113 and at each of two ends that are spaced from each other in the width direction (the left and right direction as shown in FIGS. 4 and 6). An end surface of a free end of the protrusion 1132 may be configured as a part of an outer surface of the plastic encapsulation portion 114. In this way, when the power interface 100 is connected to the power adapter, the protrusion 1132 may apply a pressure to the power adapter, such that the power interface 100 and the power adapter may be firmly connected to each other, and the stability and reliability of the connection between the power interface 100 and the power adapter may be improved.

As shown in FIGS. 3, 6, and 14, the width of the power pin 120 (here, the "width" may refer to the width of the power pin in the left-right direction as shown in FIG. 3) may be defined as W, a cross-sectional area of the power pin 120 may be defined as S, and a thickness of the power pin 120 may be defined as D. It is proved by experiments that when W=0.25mm, S=0.175mm², and D≤0.7mm, the current-carrying amount of the power pin 120 may be greatly increased, and the charging efficiency may be improved. In this embodiment, the current-carrying amount of the power pin 120 may be 10A, 12A, 14A or more.

Therefore, the first sidewall surface 121 and the second sidewall surface 122 of the power pin 120 are configured as the connection surfaces adapted to be electrically connected to the power adapter. Thus, the cross-sectional area of the power pin 120 can be increased, thereby increasing the current-carrying amount of the power pin 120, and in turn increasing the transmission speed of the current, such that the power interface 100 is capable of having a fast charging function, and thus the charging efficiency of the battery may be improved.

As shown in FIGS. 7-8, in a method for manufacturing a power interface 100 according to an embodiment of the present disclosure, the power interface 100 may be the power interface 100 as described above. The method may include the following blocks.

At block S10: providing a pin workblank 200. The pin workblank 200 may include a first surface 201 and a second surface 202 adjacent to each other.

At block S20: performing a fine blanking process for the first surface 201 in a predefined blanking direction (the direction indicated by the arrow a in FIG. 7) while burrs forming on the second surface 202.

At block S30: adjusting a position of the pin workblank 200, and performing another fine blanking process for the second surface 202 in the predefined blanking direction, thereby forming the power pin 120 of the power interface 100.

In the method for manufacturing the power interface 100 according to the embodiment of the present disclosure, different surfaces of the pin workblank 200 are processed by means of fine blanking. In this way, it is possible to not only improve the manufacturing accuracy of the power pin 120, but also omit the process of removing the burrs. Thus, the manufacturing cycle of the power interface may be shortened, and the manufacturing cost thereof may be saved.

In one embodiment of the present disclosure, before the block S30, the method may further include the following block.

At block S21: forming a round fillet at an edge of the second surface 202. It should be noted that, during the fine blanking process, excess materials may be easily accumulated at the edge of the pin workblank, thereby forming the burrs. By forming the round fillet at the edge of the second surface 202, on one hand, it is possible to improve the surface smoothness of the power pin. On the other hand, during the fine blanking process, the excess materials may be filled into the round fillet, thereby reducing the occurrence of burrs.

In another embodiment of the present disclosure, before the block S30, the method may further include the following block.

At block S21: a round fillet may be formed at edges of the second surface 202. It should be noted that, during the fine blanking process, burrs may be easily formed at the edges of the pin workblank by excess materials. By forming the round fillet at the edges of the second surface 202, on one hand, it is possible to improve the surface smoothness of the power pin. On the other hand, during the fine blanking process, the excess materials may be filled into the round fillet, thereby reducing the production of burrs.

As described in the above, the power interface 100 may include the connection body 110 and a plurality of power pins 120, and the connection body 110 may include the hard frame 113 and the plastic encapsulation portion 114. Therefore, after forming the plurality of the power pins 120 each manufactured by the above steps S10~S30, the method may further include: embedding the plurality of the power pins 120 into the connection body 110, while the first sidewall surface 121 and the second sidewall surface 122 of each of the power pins 120 are exposed outside the connection body 110, such that the first sidewall surface 121 of each of the power pins 120 exposed outside the connection body 110 is configured as a part of the first connection surface 111 of the connection body 110, the second sidewall surface 122 of each of the power pins 120 exposed outside the connection body 110 is configured as a part of the second connection surface 112 of the connection body 110, and the first connection surface 111 and the second connection surface 112 of the connection body 110 are configured as connection surfaces of the power interface adapted to be electrically connected to the power adapter.

In detailed, the step of embedding the plurality of the power pins 120 into the connection body 110, may further include: arranging the plurality of the power pins 130 into the receiving grooves 1131 of the hard frame 113 respectively; and wrapping the plurality of the power pins 120 and the hard frame 113 together by the plastic encapsulation portion 114, while the first sidewall surface 121 and the second sidewall surface 122 of each of the power pins 120 are exposed outside the plastic encapsulation portion 114.

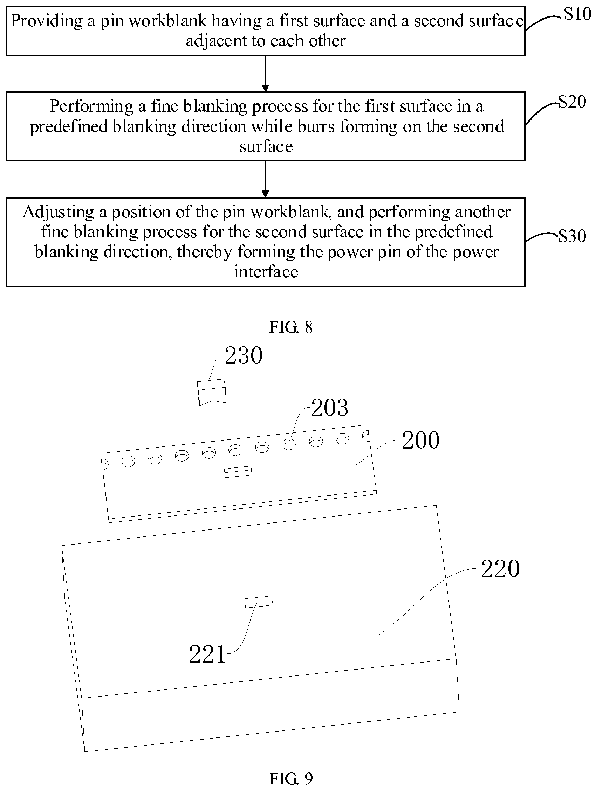

As shown in FIGS. 9-13, a method for manufacturing a power interface 100 according to another embodiment of the present disclosure may include the following blocks.

At block T10: providing a pin workblank 200, and disposing the pin workblank 200 on a first mold 220. In this embodiment, for conveniently positioning the pin workblank 200, the pin workblank 200 may have a plurality of positioning holes 203 formed therein.

At block T20: performing a punching shear process for the pin workblank 200 by a second mold 230, thereby forming the power pin of the power interface.

According to the manufacturing method of the power interface according to the present embodiment of the present disclosure, the power pin may be formed by means of the punching shear process. In this way, it is possible to omit the process of removing burrs. Thus, the manufacturing cycle may be shortened, and the manufacturing cost may be saved.

According to one embodiment of the present disclosure, the power interface 100 may be the one described in the embodiments aforesaid.

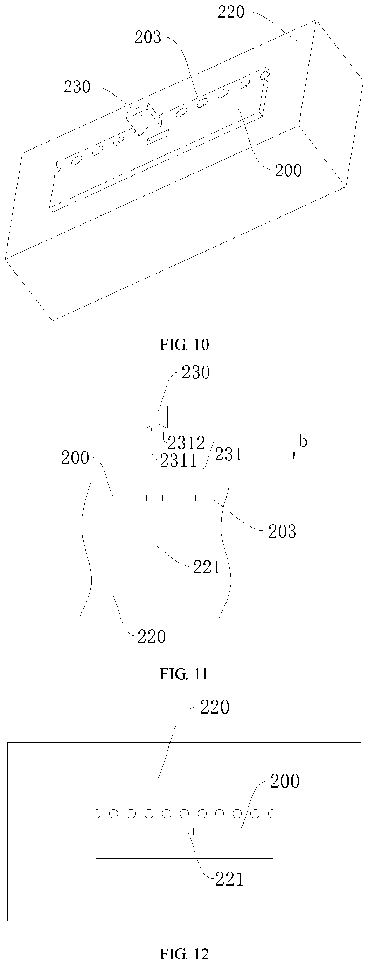

Referring to FIG. 12, in an embodiment of the present disclosure, a groove 221 may be formed in the first mold 220. On a plane substantially perpendicular to a punching-shear direction (the direction indicated by arrow b in FIG. 11), an outline of an orthographic projection area of the groove 221 may have a same shape and size as an outline of an orthographic projection area of the second mold 230. For example, on the plane substantially perpendicular to the punching-shear direction (the direction indicated by arrow b in FIG. 11), the outline of the orthographic projection area of the groove 221 may be in shape of a rectangle, and the outline of the orthographic projection area of the second mold 230 may also in shape of the rectangle, and the outline of the orthographic projection area of the groove 221 may be adapted to overlap with the outline of the orthographic projection area of the second mold 230.

According to an embodiment of the present disclosure, as shown in FIGS. 9-11, the second mold 230 may include an end surface oriented towards the first mold 220, which is served as a punching shear surface 231. A middle portion of the punching shear surface 231 may be recessed in a direction far away from the first mold 220. In this way, it is possible to reduce the burrs formed in the punching shear process of the power pin 120. More specifically, the punching shear surface 231 may include a first inclined surface 2311 and a second inclined surface 2312 joined with the first inclined surface 2311. The first inclined surface 2311 and the second inclined surface 2312 may be gradually inclined in a direction from an edge of the punching shear surface 231 to the middle portion and away from the first mold 220. In this way, tips may be formed at the edges of the punching shear surface 231, and thus it is possible to effectively reduce the occurrence of the burrs during the punching shear process.

As described in the above, the power interface 100 may include the connection body 110 and a plurality of power pins 120, and the connection body 110 may include the hard frame 113 and the plastic encapsulation portion 114. Therefore, after forming the plurality of the power pins 120 each manufactured by the above steps T10∼T30, the method may further include: embedding the plurality of the power pins 120 into the connection body 110, while the first sidewall surface 121 and the second sidewall surface 122 of each of the power pins 120 are exposed outside the connection body 110, such that the first sidewall surface 121 of each of the power pins 120 exposed outside the connection body 110 is configured as a part of the first connection surface 111 of the connection body 110, the second sidewall surface 122 of each of the power pins 120 exposed outside the connection body 110 is configured as a part of the second connection surface 112 of the connection body 110, and the first connection surface 111 and the second connection surface 112 of the connection body 110 are configured as connection surfaces of the power interface adapted to be electrically connected to the power adapter.

In detailed, the step of embedding the plurality of the power pins 120 into the connection body 110, may further include: arranging the plurality of the power pins 130 into the receiving grooves 1131 of the hard frame 113 respectively; and wrapping the plurality of the power pins 120 and the hard frame 113 together by the plastic encapsulation portion 114, while the first sidewall surface 121 and the second sidewall surface 122 of each of the power pins 120 are exposed outside the plastic encapsulation portion 114.

In the mobile terminal, the mobile terminal may include the power interface 100 manufactured by the manufacturing method as described in the embodiments above. The mobile terminal may achieve a transmission of the electrical signals and data signals via the power interface 100. For example, the mobile terminal may be charged or a data transmission function may be achieved by electrically connecting the power interface 100 to a corresponding power adapter.

In the mobile terminal, the power pin may be formed by means of shearing. In this way, it is possible to omit the process of removing burrs. Thus, the manufacturing cycle may be shortened, and the manufacturing cost may be saved.

The exemplary power adapter includes the power interface 100 as described in the embodiments above. The mobile terminal may achieve a transmission of the electrical signals and data signals via the power interface 100.

In the power adapter, the power pin is formed by means of shearing. In this way, it is possible to omit the process of removing burrs. Thus, the manufacturing cycle may be shortened, and the manufacturing cost may be saved.

## Claims

1. A method for manufacturing a power interface, comprising:
T10: providing a pin workblank (200), and disposing the pin workblank (200) on a first mold (220); and
T20: performing a punching shear process for the pin workblank (200) by a second mold (230), thereby forming a power pin (120) of the power interface (100) without a process of removing burrs;
**characterized in that**, after forming a plurality of power pins (120) each manufactured by the steps T10∼T20, the method further comprises:
embedding the plurality of power pins (120) into a connection body (110) having a first connection surface (111) and a second connection surface (112) opposite to the first connection surface (111); wherein each of the plurality of power pins (120) is solid, and comprises a first sidewall surface (121) and a second sidewall surface (122) opposite to the first sidewall surface (121); the first sidewall surface (121) and the second sidewall surface (122) of each of the power pins (120) extend beyond and are exposed outside the connection body (110), the first sidewall surface (121) is configured as a part of the first connection surface (111), and the second sidewall surface (122) is configured as a part of the second connection surface (112);
wherein the connection body (110) further comprises a hard frame (113) and a plastic encapsulation portion (114), and the step of embedding the plurality of power pins (120) into the connection body (110) comprises:
arranging the plurality of the power pins (120) into a plurality of receiving grooves (1131) of the hard frame (113) respectively; and
wrapping the plurality of the power pins (120) and the hard frame (113) by the plastic encapsulation portion (114), wherein the first sidewall surface (121) and the second sidewall surface (122) of each of the power pins (120) are exposed outside the plastic encapsulation portion (114).

2. The method of claim 1, wherein the power pin (120) has a cross-sectional area S between the first sidewall surface (121) and the second sidewall surface (122), wherein the cross-sectional area S satisfies: S≥0.09805mm², such that the power pin (120) has a capability of bearing a current not less than 10A.

3. The method of any one of claims 1-2, wherein the solid power pin (120) has a thickness D between the first sidewall surface (121) and the second sidewall surface (122), wherein the thickness D is substantially the same as the thickness of the power interface (100).

4. The method of claim 3, wherein a thickness of the solid power pin (120) satisfies: D≤ 0.7mm.

5. The method of any one of claims 1-2, wherein the power pin (120) has a width W, wherein the width W satisfies: 0.24mm≤W≤0.32mm.

6. The method of any one of claims 1-5, wherein a groove (221) is defined in the first mold (220); on a plane substantially perpendicular to a punching-shear direction, an outline of an orthographic projection area of the groove (221) has a same shape and size as an outline of an orthographic projection area of the second mold (230).

7. The method of any one of claims 1-6, wherein the second mold (230) comprises a punching shear surface (231) oriented towards the first mold (220), and a middle portion of the punching shear surface (231) is recessed in a direction away from the first mold (220).

8. The method of claims 7, wherein the punching shear surface comprises a first inclined surface (2311) and a second inclined surface (2312) joined with the first inclined surface (2311); the first inclined surface (2311) and the second inclined surface (2312) are gradually inclined in a direction from an edge of the punching shear surface (231) to the middle portion and away from the first mold (220).

9. The method of claim 1, wherein the hard frame (113) has protrusions (1132) respectively disposed at two ends of the hard frame (113) and spaced from each other in a width direction of the hard frame (113); an end surface of a free end of each of the protrusions (1132) is exposed outside the plastic encapsulation portion (114) and configured as a part of an outer surface of the plastic encapsulation portion (114).

10. The method of claim 9, wherein the protrusions (1132) are located at a front end of the hard frame (113).

## Patentansprüche

1. Verfahren zum Herstellen einer Stromschnittstelle, umfassend:
T10: Bereitstellen eines Pin-Rohlings (200) und Anordnen des Pin-Rohlings (200) auf einem ersten Formwerkzeug (220) und
T20: Durchführen eines Stanzscherprozesses für den Pin-Rohling (200) durch ein zweites Formwerkzeug (230), wodurch ein Strom-Pin (120) der Stromschnittstelle (100) ohne einen Entgratungsprozess gebildet wird,
**dadurch gekennzeichnet, dass** nach dem Bilden mehrerer Strom-Pins (120), die jeweils anhand der Schritte T10-T20 hergestellt werden, das Verfahren ferner Folgendes umfasst:
Einbetten der mehreren Strom-Pins (120) in einen Verbindungskörper (110) mit einer ersten Verbindungsfläche (111) und einer zweiten Verbindungsfläche (112) gegenüber der ersten Verbindungsfläche (111), wobei jeder der mehreren Strom-Pins (120) massiv ist und eine erste Seitenwandfläche (121) und eine zweite Seitenwandfläche (122) gegenüber der ersten Seitenwandfläche (121) umfasst, sich die erste Seitenwandfläche (121) und die zweite Seitenwandfläche (122) jedes der Strom-Pins (120) über den Verbindungskörper (110) hinaus erstrecken und außerhalb desselben freiliegen, die erste Seitenwandfläche (121) als Teil der ersten Verbindungsfläche (111) gestaltet ist und die zweite Seitenwandfläche (122) als Teil der zweiten Verbindungsfläche (112) gestaltet ist,
wobei der Verbindungskörper (110) ferner einen Hartrahmen (113) und einen Kunststoffverkapselungsabschnitt (114) umfasst und der Schritt des Einbettens der mehreren Strom-Pins (120) in den Verbindungskörper (110) Folgendes umfasst:
jeweiliges Anordnen der mehreren Strom-Pins (120) in mehrere Aufnahmenuten (1131) des Hartrahmens (113) und
Umhüllen der mehreren Strom-Pins (120) und des Hartrahmens (113) durch den Kunststoffverkapselungsabschnitt (114), wobei die erste Seitenwandfläche (121) und die zweite Seitenwandfläche (122) jedes der Strom-Pins (120) außerhalb des Kunststoffverkapselungsabschnitts (114) freiliegen.

2. Verfahren nach Anspruch 1, wobei der Strom-Pin (120) eine Querschnittsfläche S zwischen der ersten Seitenwandfläche (121) und der zweiten Seitenwandfläche (122) aufweist, wobei die Querschnittsfläche S Folgendes erfüllt: S ≥ 0,09805 mm², sodass der Strom-Pin (120) eine Fähigkeit zum Führen eines Stroms von nicht weniger als 10 A aufweist.

3. Verfahren nach einem der Ansprüche 1 bis 2, wobei der massive Strom-Pin (120) eine Dicke D zwischen der ersten Seitenwandfläche (121) und der zweiten Seitenwandfläche (122) aufweist, wobei die Dicke D im Wesentlichen gleich der Dicke der Stromschnittstelle (100) ist.

4. Verfahren nach Anspruch 3, wobei eine Dicke des massiven Strom-Pins (120) Folgendes erfüllt: D ≤ 0,7 mm.

5. Verfahren nach einem der Ansprüche 1 bis 2, wobei der Strom-Pin (120) eine Breite W aufweist, wobei die Breite Folgendes erfüllt: 0,24 mm ≤ W ≤ 0,32 mm.

6. Verfahren nach einem der Ansprüche 1 bis 5, wobei eine Nut (221) in dem ersten Formwerkzeug (220) definiert ist, auf einer Ebene im Wesentlichen senkrecht zu einer Stanzscherrichtung ein Umriss einer orthografischen Projektionsfläche der Nut (221) eine gleiche Form und Größe aufweist wie ein Umriss einer orthografischen Projektionsfläche des zweiten Formwerkzeugs (230).

7. Verfahren nach einem der Ansprüche 1 bis 6, wobei das zweite Formwerkzeug (230) eine Stanzscherfläche (231) umfasst, die zu dem ersten Formwerkzeug (220) hin ausgerichtet ist, und ein Mittelabschnitt der Stanzscherfläche (231) in eine Richtung weg von dem ersten Formwerkzeug (220) vertieft ist.

8. Verfahren nach Anspruch 7, wobei die Stanzscherfläche eine erste geneigte Fläche (2311) und eine zweite geneigte Fläche (2312), die mit der ersten geneigten Fläche (2311) verbunden ist, umfasst, wobei die erste geneigte Fläche (2311) und die zweite geneigte Fläche (2312) in eine Richtung von einem Rand der Stanzscherfläche (231) zum Mittelabschnitt und weg von dem ersten Formwerkzeug (220) allmählich geneigt sind.

9. Verfahren nach Anspruch 1, wobei der Hartrahmen (113) Vorsprünge (1132) aufweist, die an beiden Enden des Hartrahmens (113) entsprechend angeordnet und voneinander in einer Breiterichtung des Hartrahmens (113) beabstandet sind, wobei eine Endfläche eines freien Endes jedes der Vorsprünge (1132) außerhalb des Kunststoffverkapselungsabschnitts (114) freiliegt und als Teil einer Außenfläche des Kunststoffverkapselungsabschnitts (114) gestaltet ist.

10. Verfahren nach Anspruch 9, wobei sich die Vorsprünge (1132) an einem vorderen Ende des Hartrahmens (113) befinden.

## Revendications

1. Procédé de fabrication d'une interface d'alimentation, comprenant :
T10 : la fourniture d'une ébauche de broche (200), et la disposition de l'ébauche de broche (200) sur un premier moule (220) ; et
T20 : la réalisation d'un processus de cisaillement par poinçonnement de l'ébauche de broche (200) par un second moule (230), formant ainsi une broche d'alimentation (120) de l'interface d'alimentation (100) sans processus d'élimination de bavures ;
**caractérisé en ce que**, après avoir formé une pluralité de broches d'alimentation (120) fabriquées chacune par les étapes T10-T20, le procédé comprend en outre :
l'intégration de la pluralité de broches d'alimentation (120) dans un corps de connexion (110) ayant une première surface de connexion (111) et une seconde surface de connexion (112) opposée à la première surface de connexion (111) ; chacune de la pluralité de broches d'alimentation (120) étant solide, et comprenant une première surface de paroi latérale (121) et une seconde surface de paroi latérale (122) opposée à la première surface de paroi latérale (121) ; la première surface de paroi latérale (121) et la seconde surface de paroi latérale (122) de chacune des broches d'alimentation (120) s'étendant au-delà et étant exposées à l'extérieur du corps de connexion (110), la première surface de paroi latérale (121) étant configurée en tant que partie de la première surface de connexion (111), et la seconde surface de paroi latérale (122) étant configurée en tant que partie de la seconde surface de connexion (112) ;
le corps de connexion (110) comprenant en outre un cadre dur (113) et une partie d'encapsulation plastique (114), et l'étape d'intégration de la pluralité de broches d'alimentation (120) dans le corps de connexion (110) comprenant :
l'agencement de la pluralité de broches d'alimentation (120) respectivement dans une pluralité de rainures de réception (1131) du cadre dur (113) ; et
l'enveloppement de la pluralité des broches d'alimentation (120) et du cadre dur (113) par la partie d'encapsulation plastique (114), la première surface de paroi latérale (121) et la seconde surface de paroi latérale (122) de chacune des broches d'alimentation (120) étant exposées à l'extérieur de la partie d'encapsulation plastique (114).

2. Procédé selon la revendication 1, la broche d'alimentation (120) ayant une aire de section transversale S entre la première surface de paroi latérale (121) et la seconde surface de paroi latérale (122), l'aire de section transversale S satisfaisant : S ≥ 0,09805 mm², de telle sorte que la broche d'alimentation (120) a la capacité de supporter un courant non inférieur à 10 A.

3. Procédé selon l'une quelconque des revendications 1 et 2, la broche d'alimentation solide (120) ayant une épaisseur D entre la première surface de paroi latérale (121) et la seconde surface de paroi latérale (122), l'épaisseur D étant sensiblement la même que l'épaisseur de l'interface d'alimentation (100).

4. Procédé selon la revendication 3, une épaisseur de la broche d'alimentation solide (120) satisfaisant : D ≤ 0,7 mm.

5. Procédé selon l'une quelconque des revendications 1 et 2, la broche d'alimentation (120) ayant une largeur W, la largeur W satisfaisant : 0,24 mm ≤ W ≤ 0,32 mm.

6. Procédé selon l'une quelconque des revendications 1 à 5, une rainure (221) étant définie dans le premier moule (220) ; sur un plan sensiblement perpendiculaire à une direction de cisaillement par poinçonnement, un contour d'une zone de projection orthographique de la rainure (221) ayant la même forme et la même taille qu'un contour d'une zone de projection orthographique du second moule (230).

7. Procédé selon l'une quelconque des revendications 1 à 6, le second moule (230) comprenant une surface de cisaillement par poinçonnement (231) orientée vers le premier moule (220), et une partie centrale de la surface de cisaillement par poinçonnement (231) étant en retrait dans une direction s'éloignant du premier moule (220).

8. Procédé selon la revendication 7, la surface de cisaillement par poinçonnement comprenant une première surface inclinée (2311) et une seconde surface inclinée (2312) jointe à la première surface inclinée (2311) ; la première surface inclinée (2311) et la seconde surface inclinée (2312) étant progressivement inclinées dans une direction allant d'un bord de la surface de cisaillement par poinçonnement (231) jusqu'à la partie centrale et s'éloignant du premier moule (220).

9. Procédé selon la revendication 1, le cadre dur (113) ayant des saillies (1132) disposées respectivement au niveau de deux extrémités du cadre dur (113) et espacées les unes des autres dans une direction de la largeur du cadre dur (113) ; une surface d'extrémité d'une extrémité libre de chacune des saillies (1132) étant exposée à l'extérieur de la partie d'encapsulation plastique (114) et configurée en tant que partie d'une surface extérieure de la partie d'encapsulation plastique (114).

10. Procédé selon la revendication 9, les saillies (1132) étant situées au niveau d'une extrémité avant du cadre dur (113).
